# DEMANDE DE BREVET EUROPEEN

(11) **EP 1 543 791 A1**
(43) Date de publication de la demande: **22.06.2005**
(21) Numéro de dépôt: 04368076.8
(22) Date de dépôt: 15.12.2004
(51) Int. Cl.: A61C 1/08, A61C 17/08

(54) **Instrument chirurgical**

(30) Priorité: 15.12.2003 EP 03392014
(71) Demandeur: Seguela, Jean-Pierre, 98000 Monaco (MC)
(72) Inventeur: Seguela, Jean-Pierre, 98000 Monaco (MC)
(74) Mandataire: Schuffenecker, Thierry

(57) **Abrégé**

Instrument chirurgical comportant :
- une canule d'aspiration dotée d'un fut et d'un embout d'aspiration ;
- au moins une fibre optique solidaire de ladite canule et venant apporter un complément d'éclairage sur le côté dudit embout d'aspiration.

L'instrument est particulièrement adapté à la chirurgie dentaire et apporte au praticien l'assurance d'intervenir sur un site parfaitement propre et bien éclairé et ce même au fond des alvéoles les plus profondes.

## Description

### Domaine technique de l'invention

La présente invention concerne le domaine médical et notamment un instrument chirurgical pour chirurgien.

### Etat de la technique

La pratique de la chirurgie exige de la part du praticien de grandes qualités personnelles mais surtout une instrumentation adaptée à son art qui lui permet d'assurer un geste précis dans des conditions souvent difficiles.

Si l'on considère par exemple le cas du chirurgien dentiste, ce dernier est amené fréquemment à intervenir sur un site exigu - la bouche d'un patient - bien encombré par de multiples instruments déjà présents : miroirs, canules, extracteurs, turbines de fraisage etc... La plaie saigne souvent abondamment et il doit alors intervenir dans des conditions de visibilité insuffisantes.

De sa visibilité dépend pourtant la sûreté de son geste.

Des techniques sont déjà connues pour améliorer l'éclairage de base que fournit la lampe cyalitique disposée au-dessus du fauteuil du patient.

En premier lieu, on a déjà conçu des turbines de fraisage dotés d'une fibre optique permettant d'apporter une lumière axiale à l'endroit d'intervention de la fraise.

On a également imaginé une seringue dotée d'une fibre optique et un appareil de nettoyage à ultra sons, lui-également doté d'une fibre optique.

On a enfin imaginé un moyen encore plus sophistiqué, la caméra buccale qui vient rendre visible au praticien - et à son patient - le lieu d'intervention sur un afficheur électronique.

Si les techniques précédentes améliorent sensiblement la situation du chirurgien dentiste, elles restent toutefois clairement insuffisantes.

Dans le cas de la turbine éclairante par exemple, on observe que la lumière apportée par cette dernière reste axiale et il demeure alors des zones d'ombres gênantes pour la praticien.

La seringue fibrée n'est, quant à elle, d'aucune utilité lorsqu'il s'agit d'intervenir directement au fond d'une alvéole, par exemple pour retirer un morceau d'os cassé.

D'une manière générale, tous les instruments connus se révèlent insuffisants et ne permettent pas au praticien d'intervenir sur un site nettoyé et convenablement éclairé, et ce même au fond d'une alvéole qui saigne abondamment.

C'est le but auquel l'invention apporte une solution simple et efficace.

### Résumé de l'invention

L'invention a pour but un nouvel instrument chirurgical venant améliorer considérablement l'efficacité et la sécurité du geste du praticien- un chirurgien dentiste par exemple - lorsque ce dernier doit exercer son art dans les conditions les plus difficiles, notamment lorsqu'il doit intervenir sur une plaie profonde qui saigne abondamment..

L'invention a pour autre but de fournir un nouvel instrument, simple et peu onéreux à fabriquer, qui assure au praticien ou au chirurgien la possibilité d'une intervention sur site parfaitement propre et bien éclairé.

Un troisième but de la présente invention consiste à proposer un instrument chirurgical permettant de réduire l'encombrement sur un lieu particulièrement exigu comme peut l'être la bouche d'un patient.

L'invention réalise ces buts au moyen d'un instrument chirurgical comportant :
- une canule d'aspiration dotée d'un fût et d'un embout d'aspiration;
- une fibre optique solidaire de ladite canule venant apporter un complément de lumière directement sur l'embout d'aspiration.

On obtient ainsi un nouvel instrument qui présente des avantages considérables.

En premier lieu, on vient améliorer considérablement l'éclairage et par suite les conditions d'intervention du chirurgien en venant apporter un complément de lumière sur le site et ce sans venir accroître l'encombrement déjà existant. En effet, une canule d'aspiration est obligatoirement en place lorsque le chirurgien doit intervenir sur une plaie saignante.

En second lieu, et cet avantage est décisif, on obtient au moyen d'un même instrument deux effets qui sont simultanés : le nettoyage du site d'intervention et son éclairage, ce qui assure au praticien des conditions optimales pour la sûreté de son geste. En particulier, le praticien n'a plus besoin d'alterner les phases d'aspiration, d'éclairage, d'aspiration etc... pour préparer le site sur lequel il est appelé à intervenir.

Le nouvel instrument peut être employé seul ou simultanément avec une turbine éclairante. Lorsqu'il est employé seul, l'instrument permet au chirurgien de pouvoir intervenir avec extracteurs, élévateurs etc... et ce avec un minimum d'encombrement.

Lorsqu'il est utilisé en combinaison avec une turbine éclairante, l'invention vient compléter la lumière axiale produite par la turbine par un complément de lumière horizontale, venant ainsi supprimer les zones d'ombres et pallier ainsi aux insuffisances originelles de la turbine.

Lorsque la canule est de petite taille, une canule chirurgicale par exemple, l'instrument selon l'invention permet de venir nettoyer et éclairer le fond d'une alvéole.

L'invention présente ainsi une grande généralité d'applications. Elle est toutefois particulièrement adaptée à l'art du chirurgien dentiste.

### Description des dessins

D'autres caractéristiques, but et avantages de l'invention apparaîtront à la lecture de la description et des dessins ci-après, donnés uniquement à titre d'exemples non limitatifs. Sur les dessins annexés :
La figure 1 illustre un premier mode de réalisation de l'instrument selon la présente invention, doté d'un connecteur optique permettant la connexion de la fibre à une source lumineuse déportée.
La figure 2 représente un second mode de réalisation de l'instrument selon la présente invention, doté de sa propre source lumineuse et d'un connecteur électrique pour assurer l'alimentation électrique.
Les figures 3 et 4 illustrent respectivement l'adaptation de l'invention à une canule aspirante pour prothèse et une canule aspirante chirurgicale.
La figure 5 illustre l'emploi du nouvel instrument dans des conditions particulièrement difficiles, à savoir au fond d'une alvéole qui saigne abondamment.

### Description des modes de réalisation préférés

On décrira à présent quelques modes de réalisation de l'instrument chirurgical selon l'invention, adapté tout spécialement à la pratique de la chirurgie dentaire. Il est clair toutefois qu'il ne s'agit là d'exemples de réalisation nullement limitatifs et qu'un homme du métier pourra adapter l'enseignement de l'invention à toute sortes et formes de canules chirurgicales: canules pour chirurgie cardiaque.

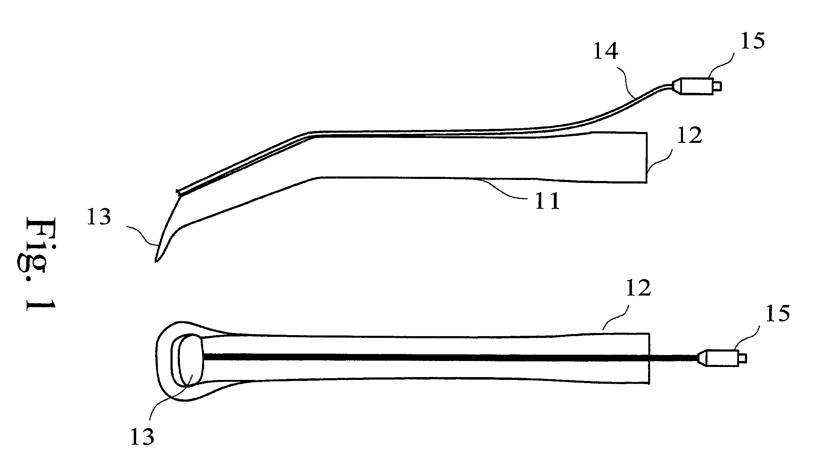

La figure 1 illustre un premier mode de réalisation qui est sans doute le plus simple à fabriquer. Ce premier mode comporte une canule ayant un corps 11, un fût 12 et un embout d'aspiration 13. Une fibre optique 14 est solidaire du corps de la canule et longe ce dernier de manière à apporter un complément d'éclairage au niveau de l'embout d'aspiration 13. Un connecteur optique 15 permet d'assurer la connexion de la fibre optique sur une autre fibre optique reliée à une source d'alimentation localisée, par exemple, sur le fauteuil de chirurgie. Ce mode de réalisation présente l'avantage que l'instrument pourra être nettoyé et stérilisé aisément, sans risque de détérioration de la source lumineuse.

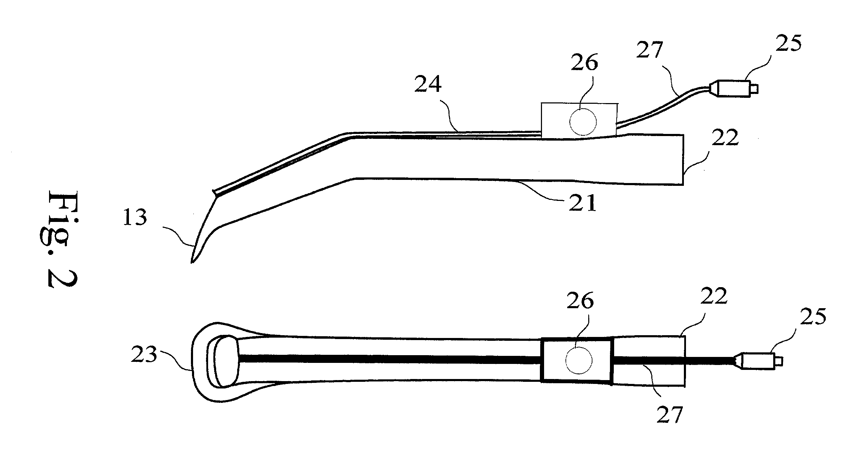

La figure 2 montre un second mode de réalisation dans lequel, à l'instar d'une turbine éclairante, la source lumineuse est localisée dans la canule elle-même. L'instrument comporte un corps 21, un fût 22 et un embout d'aspiration 23. Une source lumineuse 26 - qui pourra être toute source électrique à filament ou à rayonnement telle qu'une diode L.E.D. (*Light Electroluminescent Diod*) - est alimentée via un connecteur électrique 25 et un conducteur électrique 27 et permet de générer une lumière, laquelle est ensuite transportée via une fibre optique 24 jusqu'à l'extrémité de la canule, du côté de l'embout d'aspiration 23. La source lumineuse 26 sera disposée dans un emplacement aisément accessible afin de permettre un remplacement facile de la lampe en cas de détérioration de celle-ci.

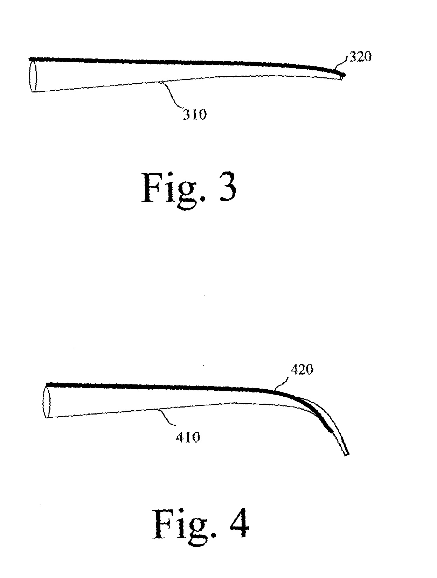

Les figures 3 et 4 montrent deux exemples de canules éclairantes, respectivement une canule de prothèse 310 et une canule chirurgicale 410 dotée chacune d'une fibre optique, respectivement 320 et 420.

On observe en effet que l'invention est particulièrement avantageuse pour la réalisation d'une canule de prothèse car on obtient alors une combinaison extrêmement avantageuse d'effets simultanés facilitant considérable l'acte du praticien, notamment dans la taille des couronnes et des bridges.

Comme on le voit sur la figure 3, la canule de prothèse selon l'invention comporte un embout d'aspiration qui comporte une lèvre permettant d'écarter la langue ou les bords d'une incision. Dans cette configuration, il y a coopération entre la fibre optique, la lèvre et l'embout d'aspiration et, en un unique instrument, le praticien peut alors simultanément aspirer et écarter les tissus fragiles du patient en toute sécurité.

Cet effet est encore amélioré lorsque l'extrémité opposée de l'embout d'aspiration de la canule est adaptée de manière à permettre la libre rotation de cette dernière. On obtient alors une canule rotative qui permet en un seul mouvement de diriger le flux lumineux, tout en écartant les tissus fragiles du patient et en aspirant les lieux d'intervention.

La canule chirurgicale 410 de la figure 4 présente comme on le voit un embout avec une dimension particulièrement réduite, ce qui lui permet de nettoyer et d'éclairer simultanément le fond d'une alvéole sur laquelle doit intervenir le praticien. L'invention peut être adaptée à une grande variété de canules d'aspiration, et notamment aux canules courtes pour aspiration présentant une angulation plus ou moins accentuée, aux canules présentant des embouts détachables et divers (la flexibilité de la fibre optique permettant l'adaptation aux multiples embouts existants), aux canules sécables (la fibre optique pouvant être elle même sécable), aux canules à usage unique et à toutes sortes d'embouts d'aspiration qui peuvent être ainsi dotés d'une fibre optique permettant un éclairage convenable sur le site de nettoyage.

On a observé que l'on pouvait faciliter encore davantage le travail du praticien en prévoyant un corps de canule déformable, ce qui permet alors de venir intervenir dans les lieux souvent inaccessibles aux outils classiques.

Dans un autre mode de réalisation particulièrement avantageux, la canule sera dotée d'un second canal destiné à permettre l'écoulement d'un spray sur le lieu d'intervention du praticien, ledit spray servant à nettoyer le site et étant ensuite automatiquement aspiré. On peut ainsi, très simplement, réaliser un outil chirurgical multifonction.

Il est même possible d'envisager d'adapter l'invention à des canules comportant plusieurs éléments, à condition de prévoir un nombre correspondant de connecteurs, optiques ou électriques, selon le cas.

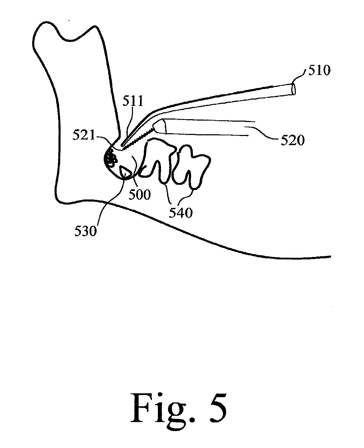

La figure 5 illustre l'emploi d'un instrument conformément à la présente invention dans une condition d'ordinaire particulièrement difficile, à savoir l'extraction d'un apex fracturé au fond d'une alvéole lors de l'avulsion d'une dent de sagesse incluse.

Comme on le voit sur la figure, on a une alvéole 500 particulièrement difficile d'accès, dans laquelle se trouve un fragment de racine 530 que le praticien doit extraire.

Cette situation est particulièrement délicate dans des conditions habituelles d'intervention car il faut au praticien nettoyer la plaie, puis éclairer pour identifier l'emplacement du morceau de racine à extraire, puis tenter d'extraire ce morceau au moyen d'un élévateur. En outre, lorsque le praticien utilise une turbine - comme la turbine 520 dotée d'une fraise à os 521, il est nécessaire d'apporter alors sur le site un jet ou *spray* refroidissant afin d'éviter tout risque de nécrose du fait de la chaleur dégagée lors du fraisage sur l'os. Ce *spray* est abondant et vient s'ajouter aux écoulements de sang qu'il faut alors éliminer au fur et à mesure de leur apparition, ce qui impose alors de fréquentes phases d'éclairage, d'aspiration, de fraisage etc...

Avec l'invention, le praticien est assuré de pouvoir intervenir sur un site suffisamment éclairé et convenablement nettoyé, lui permettant ainsi un geste rapide et sûr.

Il n'est plus nécessaire d'alterner des phases d'éclairage et d'aspiration.

Même le retrait du fragment 530 en est grandement facilité. Avec l'invention, cette opération - d'habitude si délicate - peut être effectuée très simplement puisque, avec sa main gauche, le praticien manipule la canule éclairante de manière à simultanément nettoyer et éclairer le fond de l'alvéole pour déterminer l'emplacement exact du fragment à extraire tandis que sa main droite manipule l'élévateur afin d'extraire ce dernier.

Comme on le voit, l'instrument permet un geste rapide et sûr même dans les conditions les plus difficiles. Il est utilisable dans de multiples circonstances et peut remplacer d'emblée les canules aspirantes ordinaires. En outre, il n'impose pas au praticien de modifier ses habitudes de travail ni le rôle dévolu à son assistante.

C'est un instrument nouveau, aussi simple qu'efficace qui faisait défaut à l'art du chirurgien dentiste. Cet instrument est particulièrement bon marché à fabriquer, ce qui permet même d'envisager d'en envisager une version jetable après emploi.

Les fauteuils de chirurgie dentaire pourront être aisément adaptés afin de présenter une platine permettant la connexion du connecteur optique 15 ou électrique 25, selon le cas. De tels aménagements sont clairement à la portée d'un homme du métier et ne seront par conséquent pas développés plus avant.

## Revendications

1. Instrument chirurgical comportant :
- une canule d'aspiration dotée d'un fut et d'un embout d'aspiration ;
- au moins une fibre optique solidaire de ladite canule et venant apporter un complément d'éclairage sur le côté dudit embout d'aspiration.

2. Instrument selon la revendication 1 **caractérisé en ce qu'**il comporte du côté du fût un connecteur optique permettant la connexion à une source lumineuse fixée sur une base.

3. Instrument selon la revendication 1 **caractérisé en ce qu'**il comporte une source lumineuse solidaire de ladite canule et, du côté du fût, un connecteur électrique permettant une alimentation électrique de ladite source lumineuse.

4. Instrument selon l'une quelconque des revendications précédentes **caractérisé en ce que** ladite canule est une canule de chirurgie dentaire.

5. Instrument chirurgical selon la revendication 4 **caractérisé en ce que** ladite canule est une canule de prothèse dans laquelle ledit embout d'aspiration comporte une lèvre permettant d'écarter la langue ou les bords d'une incision.

6. Instrument chirurgical selon la revendication 5 caractérisé en ce ladite canule est rotative ce qui permet de diriger le flux lumineux produit par ladite fibre optique.

7. Instrument chirurgical selon la revendication 4 **caractérisé en ce que** ladite canule est une canule chirurgicale déformable.

8. Instrument chirurgical selon l'une quelconque des revendications précédentes **caractérisé en ce que** ladite canule est dotée d'un second canal permettant la diffusion d'un spray nettoyant.

9. Fauteuil de dentiste comportant une platine permettant la connexion d'un instrument chirurgical comportant une canule d'aspiration dotée d'un fût et d'un embout d'aspiration ; et au moins une fibre optique solidaire de ladite canule et venant apporter un complément d'éclairage sur le côté dudit embout d'aspiration.

10. Fauteuil de dentiste conformément à la revendication 9 **caractérisé en ce qu'**il comporte un connecteur optique permettant la connexion à une canule dotée d'une fibre optique pour éclairer le côté de l'embout d'aspiration.
